# EUROPEAN PATENT SPECIFICATION

(11) **EP 3 538 389 B1**
(45) Date of publication and mention of the grant of the patent: **30.08.2023**
(21) Application number: 17805134.8
(22) Date of filing: 14.11.2017
(51) Int. Cl.: B60K 6/48, B60K 23/04, B60K 17/16, F16H 48/36, B60K 6/52, B60K 7/00

(54) **VEHICLE DRIVE SYSTEM**
FAHRZEUGANTRIEBSSYSTEM
SYSTÈME DE TRANSMISSION DE VÉHICULE

(30) Priority: 14.11.2016 SE 1651484
(43) Date of publication of application: 18.09.2019
(73) Proprietor: BorgWarner Sweden AB, 261 24 Landskrona (SE)
(72) Inventor: NILSSON, Kristoffer, 22731 Lund (SE)
(74) Representative: Ström & Gulliksson AB
(86) International application number: PCT/EP2017/079130
(87) International publication number: WO 2018/087375

(56) References cited:
- WO-A1-2015/169837
- WO-A1-2015/169837
- WO-A1-2015/185042
- DE-A1-102012 220 970
- DE-A1-102014 007 940
- DE-A1-102015 119 067
- US-A1- 2015 192 192

## Description

### Technical field

The present invention relates a vehicle driveline system. More particularly, the present invention relates to a vehicle driveline system comprising an electrical motor allowing for selective hybridization and torque vectoring.

### Background

During recent years there is a trend of adding an additional electric motor to vehicle driveline systems with a prime mover. The implementation of an additional electric motor allows for new functionality and benefits.

One example of such functionality is the hybrid technology, i.e. the technology of adding electric drive to existing internal combustion engine drives, and allowing the vehicle to be driven either electrically, by the internal combustion engine, or both. The present applicant has previously presented several solutions for hybrid drive, e.g. as being described in WO2010101506 or in WO2012066035, as well as in WO2015169837, which discloses a hybrid drive allowing for torque transfer from an electric motor to a differential via a planetary gearing connected to hollow shaft connected to the differential. DE102014007940 discloses a hybrid drive comprising a clutch between an outer crown wheel and a differential body.

Another example of such functionality is torque vectoring, i.e. to selectively transfer torque either longitudinally, i.e. between the front and rear axle, or laterally, i.e. between two wheels on a common axle.

A versatile approach for allowing car manufacturers to design the desired functionality using an electrical motor would thus be desired.

### Summary

An object of the invention is therefore to provide a vehicle driveline system overcoming the drawbacks of the prior art. Especially an idea of the present invention is to provide a vehicle driveline system being capable of selectively connect an electrical motor to a differential input in order to obtain hybrid drive or torque vectoring.

Further, as car manufacturers usually provide equipment depending on the needs of the customer, an object is to provide a module-based system which allows the designer or car manufacturer to add or remove functionality with as less effort and constructional modifications as possible.

The vehicle driveline system for a vehicle comprises a differential having a differential housing connectable to an engine via a pinion, and two output shafts being connectable with respective wheel axles, and an electrical motor being selectively connected to the differential housing.

To provide the selective connection to the electric motor to the differential housing, said differential housing extends into a hollow shaft and the differential housing comprises an outer gearing configured to mesh with the pinion and an inner gearing being connected with the output shafts.

The vehicle driveline system further comprises a first reduction gearing connected to the hollow shaft and an actuator arrangement arranged between the differential housing and the first reduction gearing. By selectively transferring torque between the first reduction gearing and the differential housing different modes for controlling the torque provided by the electric motor can be achieved.

Accordingly, the actuator arrangement is configured to selectively transfer torque in any of the following modes:
i) A first mode in which the actuator arrangement is configured to be actuated to allow for torque transfer from the electrical motor to the differential housing only via the hollow shaft.
ii) A second mode in which the actuator arrangement is configured to be actuated to allow for torque transfer from the electrical motor to the hollow shaft via the first reduction gearing.

The vehicle driveline system further comprises a disconnect clutch being configured to selectively connect the outer gearing of the differential housing to the inner gearing of the differential housing.

The actuator arrangement further comprises a shifting sleeve wherein the hollow shaft has a radial protrusion provided with engagement means, such as splines, for connecting with the shifting sleeve. Said shifting sleeve is configured to be actuated for connecting the electrical motor to said differential housing. The shifting sleeve is further configured to be actuated for connecting the electrical motor to said first reduction gearing. With said shifting sleeve the modes can be achieved in a manner without requiring space consuming and complex components.

Hence, a low and high gear electric motor drive mode is achieved in a manner which allows for a less complex and less space consuming vehicle driveline system.
Said vehicle driveline system also provides a modular solution whereby the electric motor functionality can be implemented to an existing vehicle driveline system by fitting the first reduction gearing to a vehicle driveline system without requiring intrusive alteration.

Advantageously, the actuator arrangement may be further configured to selectively transfer torque in:
iii) A third mode in which the actuator arrangement is configured to disable torque transfer from the electric motor to the differential housing.

According to an embodiment, the vehicle driveline system further comprises a second reduction gearing connected to one of the output shafts and the first reduction gearing. The addition of the second reduction gearing enables torque vectoring as well as an additional neutral gear for the electric motor in a manner which is less space consuming and complex. The addition of the second reduction gearing does not require any major alteration of the vehicle driveline system, whereby a vehicle driveline system easier to mount and manufacture can be achieved.

With the second reduction gearing the actuator arrangement may further be configured to selectively transfer torque in:
iv) a fourth mode in which the actuator arrangement is configured to be actuated to allow for torque transfer from the electrical motor to the output shaft via the second reduction gearing (e.g. torque vectoring).

Preferably, the first reduction gearing is a gear train having a last gear being arranged coaxially around the hollow shaft of the differential housing. Said last gear may have means, such as splines, for connecting with the actuator arrangement. The reduction gear may further have an output shaft connected to the differential housing in order to provide torque from the electric motor to the differential housing.

The first reduction gearing is advantageously a planetary gearing, whereby the output shaft of the first reduction gearing is formed by a planet carrier and the first reduction gearing further comprises a ring wheel meshing with the planet carrier.

Also, the second reduction gearing may be a gear train having a gear having means, such as splines, for connecting with the actuator arrangement.

The second reduction gearing is advantageously a planetary gearing, whereby the gear of the second reduction gearing is a ring wheel.

For space saving purposes, the gear of the second reduction gearing may be arranged substantially coaxial to the ring wheel of the first reduction gearing.

Said actuator arrangement may further comprise a clutch arrangement to enable the fourth mode, whereby the clutch arrangement is arranged between the ring wheel of the first reduction gearing and the ring wheel of the second reduction gearing.

According to an aspect not forming part of the invention an all wheel drive axle is configured to be connected with one or more modules selected from a group of connectable modules comprising a first module comprising a disconnect clutch configured to selectively connect the outer gearing of the differential housing to the inner gearing of the differential housing and a second module comprising an electrical motor being selectively connected to the differential housing. Said group may further include a third module comprising a first reduction gearing connected to the electrical motor and selectively connectable to the hollow shaft and a fourth module comprising a second reduction gearing connected to one of the output shafts and selectively connectable to the first reduction gearing.

According to one embodiment not forming part of the invention a method for providing an all wheel drive axle for a vehicle is achieved. A desired functionality of the all wheel drive axle is achieved by connecting one or more connectable modules selected from a group of modules comprising a first module comprising a disconnect clutch configured to selectively connect the outer gearing of the differential housing to the inner gearing of the differential housing and a second module comprising an electrical motor being selectively connected to the differential housing. Said group of connectable modules may further comprise a third module comprising a first reduction gearing connected to the electrical motor and selectively connectable to the hollow shaft and a fourth module comprising a second reduction gearing connected to one of the output shafts and selectively connectable to the first reduction gearing.

With the aforementioned all wheel drive axle and method for providing such an axle an axle with a modular arrangement for adding functionality is achieved. Thereby, a less complex axle which is significantly simpler to mount and manufacture is achieved. It also provides for increased customizability of the functionality of a vehicle drive axle.

Preferred embodiments are defined by the appended dependent claims.

### Brief Description of Drawings

The invention will be described in further detail under reference to the accompanying drawings in which:
Fig. 1 is a schematic cross-sectional view of a vehicle driveline system not forming part of the invention.
Fig. 2 is a schematic cross-sectional view of a vehicle driveline system according to an embodiment.
Fig. 3 is a schematic cross-sectional view of a vehicle driveline system not forming part of the invention.
Fig. 4 is a schematic cross-sectional view of a vehicle driveline system according to an embodiment.

### Detailed Description

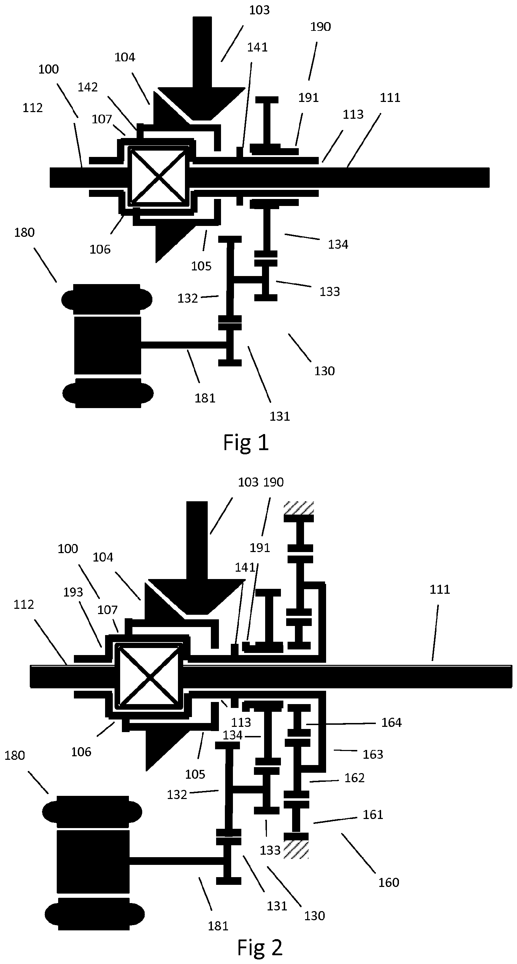

In Fig. 1 a vehicle driveline system intended for a vehicle is shown. The vehicle driveline system is configured to be used on either the front or rear axle of the vehicle in order to allow for selectively hybrid drive or torque vectoring of the associated axle. The vehicle may thus be a front wheel drive vehicle, a rear wheel drive vehicle, or an all wheel drive vehicle. The system shown in Fig. 1 could e.g. be mounted at a front axle of a front wheel drive vehicle and comprises a differential 100 connected to the engine via a pinion 103. The differential 100 receives input torque from the pinion 103 and it has two output shafts 111 and 112 intended for driving the front wheels. The differential 100 has a differential housing 106 adapted to transfer torque to the output shafts 111 and 112. As can be seen in Fig. 1 the differential housing 106 extends into a hollow shaft 113, surrounding a part of one of the output shafts 111. The hollow shaft 113 is provided with a radial protrusion 141, positioned axially displaced from the gearings of the differential 100. The radial protrusion 141 may be provided with engagement means, like for example splines intended for connecting the hollow shaft 113 to an electrical motor 180. The connection is achieved through an actuator arrangement 190 which comprises a shifting sleeve 191 which can be actuated to move axially along the hollow shaft 113 in order to connect with the engagement means provided on the radial protrusion 141. During connection between the shifting sleeve 113 and the radial protrusion 141, the electrical motor 180 is connected to the differential housing 100 whereby torque transfer from the electrical motor 180 to the differential housing 106 is enabled. Thereby, the electrical drive of the vehicle is achieved.

For this purpose the electrical motor 180, being positioned radially offset from the front axle, is connected to a reduction gearing 130 formed by a gear train. The gear train 130 includes a last gear 134 being arranged coaxially with the output shaft 111 of the differential 100, and is connected with the shifting sleeve 113 via e.g. splines or similar. Hence, when the electrical motor 180 is running the shifting sleeve 191 will rotate at a speed being determined by the speed of the electrical motor 180 and the gear ratio of the reduction gearing 130.

By actuation of the shifting sleeve 191 torque from the electrical motor 31 can selectively be transferred to the differential housing 106. In case no torque is transferred from the engine to the pinion 103 an axle driven solely by the electric motor 180, i.e. electrical drive is enabled. On the other hand, when said pinion 103 is in fact transferring torque to the differential 100 so that mechanical all wheel drive is provided, the electrical motor 180 will add additional driving torque to the front axle.

The vehicle driveline system of Fig. 1 thus allows for selective torque transfer for supporting a conventional drive system, may it be a front wheel drive system, a rear wheel drive system, or an all wheel drive system by enabling electrical drive without the need of several costly and space consuming components.

The differential housing 106 further comprises an outer gearing 104, being in driving connection with the pinion 103 and being selectively connectable with the hollow shaft 113 forming the driving connection with the output shafts 111 and 112. The outer gearing 104 is thus configured to mesh with the pinion 103, and to selectively connect with an inner gearing 107, forming the hollow shaft 113 being connected to the output shafts 111 and 112. The inner gearing 107 and the outer gearing 104 can connect through actuation of the shifting sleeve 191. As further depicted in Fig. 1 the inner gearing 107, forming the hollow shaft 191, is provided with the radial protrusions 141.

The inner gearing 107 and the outer gearing 104 in combination with the radial protrusion 141 allows for different torque transferring modes depending on the position of the shifting sleeve 191.

Further referring to Fig. 1 the electrical motor 180 is connected to the differential housing 106 via the shifting sleeve 191 which is moved axially, thereby connecting the last gear 134 of the reduction gear 130 with the inner gearing 107 of the differential housing 106 directly via the radial protrusion 42 or via the outer gearing 21 being connected to the inner gearing 22 by means of a disconnect clutch 193 being further described below.

As previously mentioned the vehicle driveline system may further comprise a disconnect clutch 193. The disconnect clutch 193 is configured to selectively connect the outer gearing 104 of the differential housing 106 to the inner gearing 107 of the differential housing 106. The disconnect clutch 193 can thus selectively connect the outer gearing 104 to the inner gearing 107 and the output shafts 111 and 112. Hence, mechanical all wheel drive is provided by connecting the disconnect clutch 193, and by disconnecting the electrical motor 180 from the differential 100.

The actuator arrangement 190 which may comprise the shifting sleeve 191 combined with the disconnect clutch 193 can be configured to be positioned in any of the drive modes mentioned below. These modes require the vehicle driveline system to be provided for all wheel drive vehicles; however as has been explained above the vehicle driveline system may also be arranged on front wheel drive vehicle or rear wheel drive vehicles for providing the corresponding functionality.

In a first drive mode the disconnect clutch 193 is connecting the outer gearing 104 and the inner gearing 107 while the shifting sleeve 191 is connecting the last gear 134 of the reduction gearing 130 directly to the inner gearing 107 of the differential housing 106. This allows for mechanical all wheel drive in combination with electrical all wheel drive.

In a second drive mode the disconnect clutch 193 is connecting the outer gearing 104 and the inner gearing 107 while the shifting sleeve 191 is not connecting the last gear 134 of the reduction gearing 130 directly to the inner gearing 107 of the differential housing 106. This allows for mechanical all wheel drive.

In a third drive mode the disconnect clutch 193 is disconnected, while the electrical motor 180 is driving the differential housing 106 via the inner gearing 107 and the shifting sleeve 191. This allows for a purely electrical driven axle.

In a fourth drive mode the disconnect clutch 193 is disconnected, while the electrical motor 180 is not driving the differential housing 106 via the inner gearing 107 and the shifting sleeve 191. This allows for a non driven axle.

Above mentioned embodiment provides limited control of the electric motor 107. In order to provide additional means to control the torque provided by the electric motor 180 the vehicle system may further comprise a reduction gearing 160.

Referring to Fig. 2 the reduction gearing 160 is a gear train having a last gear 164 which is arranged coaxially around the hollow shaft 113 of the differential housing 106. The reduction gearing 160 is connectable to the actuator arrangement 190 which comprises the shifting sleeve 191, whereby the actuator arrangement 190 comprising the shifting sleeve 191 is further configured to be actuated to connect the reduction gearing 130 to the other reduction gearing 160. To receive the shifting sleeve 191 the reduction gearing 160 may be provided with receiving means such as splines for connecting with the shifting sleeve 191.

The reduction gearing 160 may be a planetary gearing wherein an output shaft is formed by a planet carrier 163, whereby the output shaft is connected to the differential housing 106 via the hollow shaft 113. The planet carrier 163 further meshes with a ring wheel 161 which is stationary in order to enable torque transfer.

Said reduction gearing 160 allows for vehicle driveline modes which add means to control the torque transferred from the electric motor 180. With the reduction gearing 160 and the actuator arrangement 190, which may comprise the shifting sleeve 191 or a hydraulic system which will be discussed further below, is configured to selectively transfer torque in any of the following modes. These modes require the vehicle driveline system to be provided for all wheel drive vehicles; however as has been explained above the vehicle driveline system may also be arranged on front wheel drive vehicle or rear wheel drive vehicles for providing the corresponding functionality.
i) A first mode in which the actuator arrangement 190 is configured to be actuated to allow for torque transfer from the electrical motor 180 to the differential housing 106 only via the hollow shaft.

Referring to Fig. 2, in said first mode the shifting sleeve 191 is configured to be positioned to connect the electrical motor 180 to the inner gearing 107 of the differential housing 106 via the radial protrusion 141 of the hollow shaft 113. Hence, the electric motor 180 is connected with the differential housing 106 and inner gearing 107.

ii) A second mode in which the actuator arrangement 190 is configured to be actuated to allow for torque transfer from the electrical motor 180 to the hollow shaft 113 via the first reduction gearing 160. The above first mode i) and second mode ii) may be electric drive modes i.e. output shafts 111 and 112 may be driven exclusively by means of the electric motor 180 via the reduction gearing 130, optionally also via the first reduction gearing 160.

In the first mode the electric motor 180 engages with the reduction gear 130, whereby the reduction gear 130 engages with a gear 134 arranged coaxially with the hollow shaft 113. This coaxial gear 134 is in turn engaged with the hollow shaft 113 which is in driving connection with output shafts 111, 112.

In the second mode the coaxial gear 134 engaging with a sun gear 164 of the first reduction gearing 160 (here in the form of a planetary gearing). The sun gear 164 is driving planet gears 162, whereby an associated planet carrier 163 is in driving connection with the hollow shaft 113.

The electric motor 180 may be connected to differential housing only, via hollow shaft 113. In modes i) and ii) described above the output shafts 111, 112 are not directly engaged with the first reduction gearing 160.

Torque transfer from the electric motor 180 to the hollow shaft 113 is achieved by braking the ring wheel 161 of the first reduction gearing 160; thereby torque is transferred from planet gear 162 of the first reduction gearing 160 to planet carrier 163 connected to the hollow shaft 113. Thus, a compact design is achieved which is suitable for modular installation.

The first reduction gearing 160 may be provided as a module, such as a stand-alone module which may be arranged coaxial with the hollow shaft 113 and the output shafts 111, 112. The module is also connectable with the hollow shaft 113; preferably the planet carrier 163 is connected to the hollow shaft 113.

When provided as a module the first reduction gearing 160 may be mounted axially outside the reduction gear 130. Hence the first reduction gearing 160 may be mounted axially outside the differential housing 106 having the reduction gear 130 arranged in between. The electric motor 180 is arranged off-axis, i.e. radially remote from the output shafts 111, 112 and preferably also arranged axially inwards of the first reduction gearing 160, towards the differential.

The described arrangement facilitates that the first reduction gearing 160 may be provided and installed as a stand-alone module in that it may be installed on a vehicle driveline system without removing or moving the electrical motor 180 or the reduction gear 130. The first reduction gearing 160 may further be mounted coaxially with the output shafts 111, 112 and connected to the hollow shaft 113 without removing the electrical motor 180 or the reduction gearing 130 to obtain a two-gear electric drive.

Referring to Fig. 2, in said second mode the shifting sleeve 191 is configured to be positioned to connect the electrical motor 180 to the inner gearing 107 via the reduction gearing 160. Hence, the electric motor 180 is connected to the hollow shaft 113 via the reduction gearing. The second mode provides a higher transmission rate than the first mode since due to the connecting of electric motor 180 via the reduction gearing 160. Accordingly, the first mode provides a high gear electric motor connection mode while the second mode provides a low gear electric motor connection mode.

iii) A third mode in which the actuator arrangement 190 is configured to disable torque transfer from the electric motor 180 to the differential housing 106.

Referring to Fig. 2, in said third mode the shifting sleeve 191 is configured to be positioned to disconnect the radial protrusion 141 and the first reduction gearing 160 from the differential housing 106. Hence, the electric motor 180 does not provide any torque to the remaining vehicle driveline system. Accordingly, the third mode provides a neutral electric motor connection mode further to the low and high gear electric motor connection mode.

Preferably, the reduction gearing 130 enabling connecting of the electric motor 180 to the differential housing 106 via the radial protrusion 141 may have a higher transmission ratio than the reduction gearing 160 selectively connected to the reduction gearing 130. Thus, the reduction gearing 160 added to the vehicle driveline system can be more compact and less complex leading to a more compact vehicle driveline system which is easier to mount and arrange. Furthermore, having an increased transmission ratio closer to the electric motor 180 leads to an increase of the torque provided by said electric motor 180 without introducing additional losses due to friction.

Advantageously, the reduction gearing 160 has a transmission ratio between 5:1 and 1,5:1 and even more advantageously between 3:1 and 2:1. The transmission ratio of the reduction gearing 130 may be advantageously between 20:1 and 5:1, even more advantageously between 15:1 and 10:1 and even more so advantageously 13:1.

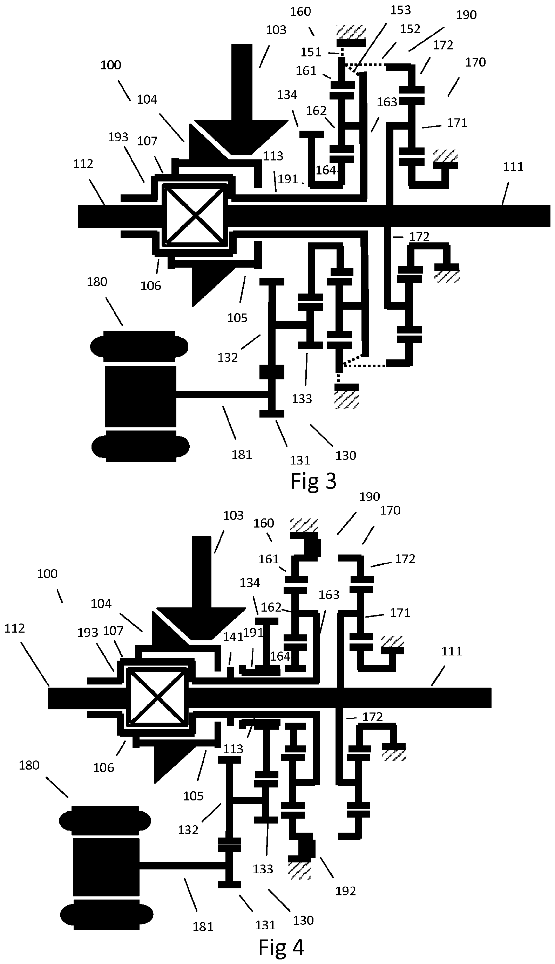

Referring to Fig 3. and 4 the vehicle driveline system may further comprise an additional reduction gearing 170. The reduction gearing 170 is connected to one of the output shafts 111 as well as the reduction gearing 160. In an example not forming part of the invention shown in Fig. 3 the actuator arrangement 190 may comprise a system for achieving both aforementioned mode 1 to 3 as well as additional modes. Preferably, the system is a hydraulic system enabling three selective connections.

A first connection 151 allowing for selective braking of the ring wheel 161, a second connection 152 allowing for selective connection with the ring wheel 172 of the second reduction gearing 170 and a third connection 153 which allows for selective connection with a planetary carrier shaft 163 of the first reduction gearing 160.

Said hydraulic system comprises a shifting mechanism and a detention device for keeping the shifting mechanism at a desired shift position. The detention device is movable with a shifting piston of the shifting mechanism which is movable between five positions. When the shifting piston of the shifting mechanism is in a first shift position, the ring wheel of the first reduction gearing 160 is locked and disconnected from the planet carrier shaft 163 extending into the hollow shaft 113 as well as disconnected from the ring wheel 172. Hence, the first reduction gearing 161 is able to provide torque to the hollow shaft 113, whereby the aforementioned second mode can be achieved.

The aforementioned first mode for the actuator arrangement to selectively transfer torque can thus be achieved by actuating the hydraulic system into a first shift position, wherein the ring wheel 161 of the first reduction gearing 160 is unlocked i.e. allowed to freewheel and connected the planet carrier shaft 163 extending into the hollow shaft 113 while being disconnected from the ring wheel 172.

The aforementioned second mode for the actuator arrangement to selectively transfer torque can be achieved by actuating the hydraulic system into a second shift position, wherein the ring wheel 161 of the first reduction gearing 160 is locked or braked and is disconnected from the planet carrier shaft 163 extending into the hollow shaft 113 as well as disconnected from the ring wheel 172.

The aforementioned third mode for the actuator arrangement to selectively transfer torque can be achieved by actuating the hydraulic system into a third shift position wherein the ring wheel 161 of the first reduction gearing 160 is allowed to freewheel and is disconnected from the planet carrier shaft 163 extending into the hollow shaft 113 as well as being disconnected from the ring wheel 172.

The shifting mechanism also has a fourth shift position wherein the ring wheel 161 of the first reduction gearing 160 is connected to the ring wheel 172 of the second reduction gearing 170. Hence, torque may be provided from the electric motor 180 to the output shaft 111. Accordingly, torque vectoring can be achieved.

The shifting mechanism further has a fifth shift position wherein the ring wheel 161 of the first reduction gearing 160 and the ring wheel 172 of the second reduction gearing 170 are disconnected while the ring wheel 161 is allowed to freewheel and is disconnected from the planet carrier shaft 163. This results in no torque being provided by the electric motor 180 to the differential housing 106 whereby an additional neutral gear can be achieved, thus providing a more robust system.

In the example shown in figure 3, which does not form part of the invention, in order to provide full torque vectoring the shifting mechanism the ring wheel 161 may be allowed to freewheel as well as being disconnected from the planet carrier shaft 163 when the shifting mechanism is in the fourth shift position. Thereby, torque is only transferred from the electric motor 180 to the output shaft 111 whereby full torque vectoring is achieved.

Referring to Fig. 4 the actuator arrangement 190 further comprises a clutch arrangement 192. The clutch arrangement 192 is arranged between the ring wheel 161 of the first reduction gearing 160 and the ring wheel 172 of the second reduction gearing 170.

Said clutch arrangement 192 may be configured to be actuated so as to selectively connect the reduction gearing 170 with the reduction gearing 160 and/or allow torque transfer from the electric motor 180 to the inner gearing 107 of the differential housing 106 via the reduction gearing 160.

Preferably, the clutch arrangement comprises two clutches. The first clutch is advantageously arranged between a gear of the first reduction gearing 160 and a gear of the second reduction gearing 170. As seen in Fig. 4 the clutch arrangement 192 comprises a first clutch connecting the ring wheel 161 of the first reduction gearing 160 and the ring wheel 172 of the second reduction gearing. Thereby said ring wheels are connected via the first clutch. The clutch arrangement further includes a second clutch adapted to selectively brake the ring wheel 161 of the first reduction gearing.

The aforementioned first mode for the actuator arrangement to selectively transfer torque can thus be achieved by actuating said first clutch to disconnect said ring wheels 161 and 172 while the second clutch is actuated so as to allow the ring wheel 161 to freewheel and the shifting sleeve 191 is actuated so as to connect with the radial protrusion 141.

The aforementioned second mode for the actuator arrangement to selectively transfer torque is achieved by actuating said second clutch so as to lock or brake the ring wheel 161 while the first clutch is actuated so as to disconnect the ring wheel 161 and the ring wheel 172.

The aforementioned third mode for the actuator arrangement to selectively transfer torque is achieved by actuating the shifting sleeve 191 to not connect with the radial protrusion 141 or the gear 164 of the first reduction gearing 160, in accordance with the embodiments disclosed in Fig. 1 and Fig. 2.

By selectively actuating said clutches torque vectoring and an additional neutral gear for the electrical motor 180 can be achieved.

For example, by actuating the first clutch so that the ring wheel 161 of the first reduction gearing 160 is connected to the ring wheel 172 of the second reduction gearing 170 torque may be provided from the electric motor 180 to the output shaft 111. Accordingly, torque vectoring can be achieved.

By actuating the second clutch so as to unlock the ring wheel 161 of the reduction gearing 160 said ring wheel 161 of the first reduction gearing 160 and the ring wheel 172 of the second reduction gearing 170 are disconnected via the first clutch no torque is provided to the differential housing 106 or the output shaft 111. Thereby a neutral gear for the electrical motor 180 can be achieved even if the shifting sleeve 191 is connected to radial protrusion 141. This allows for a more robust system.

In order to provide full torque vectoring the first clutch may be configured actuated so to allow the ring wheel 161 of the first reduction gearing 160 to freewheel when the first 160 and the second reduction gearing 170 are connected via the second clutch. Thereby, torque is only transferred from the electric motor 180 to the output shaft 111 whereby full torque vectoring is achieved.

The actuator arrangement 190 which comprises the clutch arrangement 192 in conjunction with the shifting sleeve 191 disclosed in Fig. 4 does in combination with the reduction gearing 170 allow for additional vehicle driveline modes which add means to control the torque transferred from the electric motor 180 as well as torque vectoring capabilities. With the reduction gearing 170 and the actuator arrangement 190 the vehicle driveline system can be configured to be positioned in any of the additional drive modes mentioned below.
These modes require the vehicle driveline system to be provided for all wheel drive vehicles; however as has been explained above the vehicle driveline system may also be arranged on front wheel drive vehicle or rear wheel drive vehicles for providing the corresponding functionality.

iv) A fourth mode wherein the actuator arrangement 190 is configured be actuated so as to connect the electric motor 180 to said one of the output shafts 111 via the first 160 and second 170 reduction gearing. In said fourth mode the actuator arrangement 190 may be further configured to unlock the reduction gearing 160 so as to disable torque transfer from the electric motor 180 to the differential housing 106 via said reduction gearing 160. Thus, torque is transferred solely from the electric motor 180 to the output shaft 111. Consequently a torque vectoring mode is achieved.

v) A fifth mode wherein the actuator arrangement 190 is configured to be positioned so as to not allow torque transfer from the electric motor 180 to the inner gearing 107 or the output shaft 111. This is achieved by the actuator arrangement 190 being configured to be actuated so as to disconnect the reduction gearings 160 and 170 from each other while also unlocking the reduction gearing 160. Thus, an additional electric motor neutral drive mode can be achieved.

Above mentioned additional modes allows for controlling of the electric motor 180 with a separate module comprising of the reduction gearings 160 and 170 as well as the actuator arrangement 190. This allows for better serviceability of the vehicle driveline system as well as a more compact and less complex vehicle driveline system.

Referring back to the previously discussed drive modes it should be noted that with aforementioned separate module, the low gear electric motor connection mode i.e. the second mode requires the actuator arrangement 190 to lock the reduction gearing 160 so as to allow torque transfer from the said reduction gearing.

Referring again to Fig. 4 the reduction gear 170 connecting the reduction gear 160 and one of the output shafts 111 may be a gear train in which a gear 170 is provided with means for connecting with the actuator arrangement 190 e.g. the clutch arrangement 192.

Said reduction gear 170 may advantageously have a transmission ratio lower than the reduction gearing 130 in order to achieve a less complex reduction gear 170 to be fitted to the vehicle driveline system. Hence, a less complex and lighter vehicle drive system which is easier to mount and arrange can be achieved.

In order to achieve a customizable all wheel drive axle the axle shown in Fig. 1-4 is configured to be connected with any of the aforementioned components in a modular manner. Hence said components may be provided in modules whereby one or more modules is selected from a group of connectable modules.

Said group of modules may comprise the following connectable modules:
1) A first module comprising a disconnect clutch 193 configured to selectively connect the outer gearing 104 of the differential housing 106 to the inner gearing 107 of the differential housing 106.
2) A second module comprising an electrical motor 180 being selectively connected to the differential housing 106.
3) A third module comprising a first reduction gearing 160 connected to the electrical motor 113 and selectively connectable to the hollow shaft 113.
4) A fourth module comprising a second reduction gearing 170 connected to one of the output shafts 111 and selectively connectable to the first reduction gearing 160.

The first module allows for configuring the vehicle driveline system in various modes. For example a purely mechanical drive mode can be obtained by connecting clutch 193.

The second module comprises an electrical motor 180 being selectively connected to the differential housing 106. Thereby a hybrid drive mode or a pure electric drive mode may be achieved respectively, as well as torque vectoring functionality.

A pure electric drive mode of the drive axle 100 is obtained by disconnecting disconnect clutch 193 and activating the electric motor 180.

In addition, a hybrid drive mode can be achieved by connecting disconnect clutch 193 and activating electric motor 180.

The third module comprises the first reduction gearing 160 in driving connection with the electrical motor 180 and selectively connectable to the hollow shaft 113. Thereby, a two-gear hybrid drive mode or a two-gear purely electric drive mode is achieved respectively.

The fourth module comprises a second reduction gearing 170 connected to one of the output shafts 111, 112 and selectively connectable to the first reduction gearing 160. Thereby, a torque vectoring driving mode is achieved.

The forth module may be arranged axially outside the third module comprising the first reduction gearing 160.

According to one embodiment, the actuator arrangement 190 and the disconnect clutch 193 are configured to selectively transfer torque in any of the following modes:
a first drive mode wherein the disconnect clutch 193 is connecting the outer gearing 104 and the inner gearing 107 and the shifting sleeve 191 is connecting the reduction gear 130 directly to the inner gearing 107 of the differential housing 106;
a second drive mode wherein the disconnect clutch 193 is connecting the outer gearing 104 and the inner gearing 107 and the shifting sleeve 191 is not connecting the last gear 134 of the reduction gear 130 directly to the inner gearing 107 of the differential housing 106;
a third drive mode wherein the disconnect clutch 193 is disconnected while the electrical motor 180 is driving the differential housing 106 via the inner gearing 107 and the shifting sleeve 191;
a fourth drive mode wherein the disconnect clutch 193 is disconnected and the electrical motor 180 is not driving the differential housing 106 via the inner gearing 107 and the shifting sleeve 191.

According to one embodiment, the vehicle driveline system 100 further comprises a first reduction gearing 160 connected to the hollow shaft 113 and an actuator arrangement 190 arranged between the differential housing 106 and the first reduction gearing 160.

As has been explained above, the desired functionality of the vehicle driveline is achieved by connecting one or more connectable modules to the drive axle, the modules selected from a group of modules comprising a first module having a disconnect clutch 193 configured to selectively connect an outer gearing 104 of the differential housing 106 to the inner gearing 107 of the differential housing 106.a second module having an electrical motor 180 being selectively connected to the differential housing 106 via the hollow shaft 113. a third module having a first reduction gearing 160 connected to the hollow shaft 113 and selectively connectable to the electrical motor 113 by means of the shifting sleeve 191 configured to be actuated to allow for torque transfer from the electrical motor 180 to the hollow shaft 113 via the first reduction gearing 160, and a fourth module having a second reduction gearing 170 connected to one of the output shafts 111 and selectively connectable to the first reduction gearing 160.

The above module-based concept also allows for an improved method of designing a vehicle driveline system for an all-wheel drive road vehicle, and in particular a vehicle axle already being provided with a differential 100 having a differential housing 106 connectable to an engine via a pinion 103. The vehicle axle is further provided with two output shafts 111,112 being connectable with respective wheel axles, and the differential housing 106 extends into a hollow shaft 113; the differential housing 106 further comprises an outer gearing 104 configured to mesh with the pinion 103 and an inner gearing 107 being connected with the output shafts 111,112.

Starting with such vehicle axle, the method comprises receiving a desired functionality of the all-wheel drive axle; and selecting at last one module from a small set of key modules to achieve the desired functionality. The functionality comprises at least a torque requirement and/or a speed requirement and/or an output power requirement and/or a pure electrical propulsion requirement, mechanical propulsion requirement, and/or hybrid propulsion requirement and/or torque vectoring requirement.

The step of selecting at least one module is performed by accessing a list of available modules, and to select at least one of these. The list of available modules comprises a first module having a disconnect clutch 193 configured to selectively connect the outer gearing 104 of the differential housing 106 to the inner gearing 107 of the differential housing 106, a second module having an electrical motor 180 being selectively connected to the differential housing 106, a third module having a first reduction gearing 160 connected to the hollow shaft 113 and selectively connectable to the electrical motor 113, and a fourth module having a second reduction gearing 170 connected to one of the output shafts 111 and selectively connectable to the first reduction gearing 160.

Thus, a desired functionality of the all wheel drive axle is achieved by connecting one or more connectable modules selected from a group of modules.

Preferably, the actuator arrangement 190 according to the aforementioned embodiments is included when the second module or the second and third module or the second to fourth module is connected to the all wheel drive axle.

Although the present invention has been described above with reference to specific embodiments, it is not intended to be limited to the specific form set forth herein. Rather, the invention is limited only by the accompanying claims.

## Claims

1. A vehicle driveline system for a vehicle, said system comprising a differential (100) having a differential housing (106) connectable to an engine via a pinion (103), and two output shafts (111,112) being connectable with respective wheel axles, and an electrical motor (180) being selectively connected to the differential housing (106),
wherein the differential housing (106) extends into a hollow shaft (113) and the differential housing (106) comprises an outer gearing (104) configured to mesh with the pinion (103) and an inner gearing (107) being connected with the output shafts (111,112), and
whereby the vehicle driveline system further comprises a first reduction gearing (160) connected to the hollow shaft (113) and an actuator arrangement (190) arranged between the differential housing (106) and the first reduction gearing (160),
whereby said actuator arrangement is configured to selectively transfer torque in any of the following modes:
i) a first drive mode in which the actuator arrangement (190) is configured to be actuated to allow for torque transfer from the electrical motor (180) to the differential housing (106) directly via the hollow shaft (113);
ii) a second drive mode in which the actuator arrangement (190) is configured to be actuated to allow for torque transfer from the electrical motor (180) to the hollow shaft (113) via the first reduction gearing (160),
wherein the vehicle driveline system further comprises a disconnect clutch (193) being configured to selectively connect the outer gearing (104) of the differential housing (106) to the inner gearing (107) of the differential housing (106),
whereby the actuator arrangement comprises a shifting sleeve (191) wherein the hollow shaft (113) has a radial protrusion (141) provided with engagement means, such as splines, for connecting with the shifting sleeve (191), wherein said shifting sleeve (191) is configured to be actuated for connecting the electrical motor (180) to said differential housing (106), and
whereby the shifting sleeve (191) is further configured to be actuated for connecting the electrical motor (180) to said first reduction gearing (160), and wherein the inner gearing (107) forms the hollow shaft (113) having the radial protrusion (141).

2. The vehicle driveline system according to claim 1, wherein the actuator arrangement is further configured to selectively transfer torque in:
iii) a third neutral mode in which the actuator arrangement (190) is configured to disable torque transfer from the electric motor (180) to the differential housing (106).

3. The vehicle driveline system according to claim 1 or 2, wherein the vehicle driveline system further comprises a second reduction gearing (170) connected to one of the output shafts (111) and selectively to the first reduction gearing (160).

4. The vehicle driveline system according to claim 3, wherein the actuator arrangement (190) is further configured to selectively transfer torque in:
iv) a fourth torque vectoring mode in which the actuator arrangement (190) is configured to be actuated to allow for torque transfer from the electrical motor (180) to the output shaft (111) via the second reduction gearing (170).

5. Er. The vehicle driveline system according to any of the preceding claims, wherein the first reduction gearing (130) is a gear train having a last gear (164) being arranged coaxially around the hollow shaft (113) of the differential housing (106) , said last gear (164) having means, such as splines, for connecting with the actuator arrangement (190), and wherein the first reduction gearing (160) is a planetary gearing.

6. The vehicle driveline system according to any of any of the preceding claims, wherein the first reduction gearing (160) has an output shaft (163) connected to the differential housing (106), and wherein the output shaft (163) of the first reduction gearing (130) is formed by a planet carrier (163) and the first reduction gearing (160) further comprises a ring wheel (161) meshing with the planet carrier (163).

7. The vehicle driveline system according to any of claim 3 or 4, wherein the second reduction gearing (170) is a gear train having a gear (172) having means, such as splines, for connecting with the actuator arrangement (190), wherein the second reduction gearing (170) is a planetary gearing, and wherein the gear (172) of the second reduction gearing (170) is a ring wheel.

8. The vehicle driveline system according to claim 6 and 7, wherein the gear (172) of the second reduction gearing (170) is arranged substantially coaxial to the ring wheel (161) of the first reduction gearing (160).

9. The vehicle driveline system according to claim 8, wherein the actuator arrangement (190) further comprises a clutch arrangement (192) arranged between the ring wheel (161) of the first reduction gearing (160) and the ring wheel (172) of the second reduction gearing (170).

10. The vehicle driveline system according to any of the preceding claims, wherein the electrical motor (180) is selectively connected to the differential housing (106) via a third reduction gearing (130), optionally wherein the electrical motor (180) is arranged radially outside the hollow shaft (113).

## Patentansprüche

1. Fahrzeug-Antriebsstrangsystem für ein Fahrzeug, wobei das System ein Differential (100) mit einem Differentialgehäuse (106), das über ein Ritzel (103) mit einem Motor verbunden werden kann, und zwei Ausgangswellen (111, 112), die mit den jeweiligen Radachsen verbunden werden können, und einen Elektromotor (180), der selektiv mit dem Differentialgehäuse (106) verbunden ist, aufweist,
wobei sich das Differentialgehäuse (106) in eine Hohlwelle (113) erstreckt und das Differentialgehäuse (106) eine äußere Verzahnung (104) aufweist, die so konfiguriert ist, dass sie mit dem Ritzel (103) in Eingriff steht, und eine innere Verzahnung (107), die mit den Ausgangswellen (111, 112) verbunden ist, und
wobei das Fahrzeug-Antriebsstrangsystem ferner ein erstes Untersetzungsgetriebe (160) aufweist, das mit der Hohlwelle (113) verbunden ist, und eine Aktuatoranordnung (190), die zwischen dem Differentialgehäuse (106) und dem ersten Untersetzungsgetriebe (160) angeordnet ist,
wobei die Aktuatoranordnung konfiguriert ist zum selektiven Übertragen von Drehmoment in einem der folgenden Modi:
i) einem ersten Antriebsmodus, in dem die Aktuatoranordnung (190) konfiguriert ist zum Betätigt werden, um eine Drehmomentübertragung von dem Elektromotor (180) zu dem Differentialgehäuse (106) direkt über die Hohlwelle (113) zu ermöglichen;
ii) einen zweiten Antriebsmodus, in dem die Aktuatoranordnung (190) konfiguriert ist zum Betätigt werden, um eine Drehmomentübertragung von dem Elektromotor (180) zu der Hohlwelle (113) über das erste Untersetzungsgetriebe (160) zu ermöglichen,
wobei das Fahrzeug-Antriebsstrangsystem ferner eine Trennkupplung (193) aufweist, die konfiguriert ist zum selektiven Verbinden der Außenverzahnung (104) des Differentialgehäuses (106) mit der Innenverzahnung (107) des Differentialgehäuses (106),
wobei die Aktuatoranordnung eine Schiebemuffe (191) aufweist, wobei die Hohlwelle (113) einen radialen Vorsprung (141) aufweist, der mit Eingriffsmitteln, wie beispielsweise Keilnuten, zum Verbinden mit der Schiebemuffe (191) versehen ist, wobei die Schiebemuffe (191) konfiguriert ist zum Betätigt werden, um den Elektromotor (180) mit dem Differentialgehäuse (106) zu verbinden, und
wobei die Schiebemuffe (191) ferner konfiguriert ist zum Betätigt werden, um den Elektromotor (180) mit dem ersten Untersetzungsgetriebe (160) zu verbinden, und wobei die Innenverzahnung (107) die Hohlwelle (113) mit dem radialen Vorsprung (141) bildet.

2. Fahrzeug-Antriebsstrangsystem nach Anspruch 1, wobei die Aktuatoranordnung ferner konfiguriert ist zum selektiven Übertragen von Drehmoment in:
iii) einem dritten neutralen Modus, in dem die Aktuatoranordnung (190) konfiguriert ist zum Deaktivieren einer Drehmomentübertragung von dem Elektromotor (180) zu dem Differentialgehäuse (106).

3. Fahrzeug-Antriebsstrangsystem nach Anspruch 1 oder 2, wobei das Fahrzeug-Antriebsstrangsystem ferner ein zweites Untersetzungsgetriebe (170) aufweist, das mit einer der Ausgangswellen (111) und selektiv mit dem ersten Untersetzungsgetriebe (160) verbunden ist.

4. Fahrzeug-Antriebsstrangsystem nach Anspruch 3, wobei die Aktuatoranordnung (190) ferner konfiguriert zum selektiven Übertragen von Drehmoment in:
iv) einem vierten Drehmomentvektorisierungsmodus, in dem die Aktuatoranordnung (190) konfiguriert ist zum Betätigt werden, um eine Drehmomentübertragung von dem Elektromotor (180) auf die Ausgangswelle (111) über das zweite Untersetzungsgetriebe (170) zu ermöglichen.

5. Fahrzeug-Antriebsstrangsystem nach einem der vorhergehenden Ansprüche, wobei das erste Untersetzungsgetriebe (130) ein Zahnradgetriebe ist, das ein letztes Zahnrad (164) aufweist, das koaxial um die Hohlwelle (113) des Differentialgehäuses (106) angeordnet ist, wobei das letzte Zahnrad (164) Mittel, wie z.B. Keile, zur Verbindung mit der Aktuatoranordnung (190) aufweist, und wobei das erste Untersetzungsgetriebe (160) ein Planetengetriebe ist.

6. Fahrzeug-Antriebsstrangsystem nach einem der vorhergehenden Ansprüche, wobei das erste Untersetzungsgetriebe (160) eine Ausgangswelle (163) aufweist, die mit dem Differentialgehäuse (106) verbunden ist, und wobei die Ausgangswelle (163) des ersten Untersetzungsgetriebes (130) durch einen Planetenträger (163) gebildet wird und das erste Untersetzungsgetriebe (160) ferner ein Hohlrad (161) aufweist, das mit dem Planetenträger (163) in Eingriff steht.

7. Fahrzeug-Antriebsstrangsystem nach einem der Ansprüche 3 oder 4, wobei das zweite Untersetzungsgetriebe (170) ein Zahnradgetriebe mit einem Zahnrad (172) ist, das Mittel, wie z.B. Keile, zur Verbindung mit der Aktuatoranordnung (190) aufweist, wobei das zweite Untersetzungsgetriebe (170) ein Planetengetriebe ist und wobei das Zahnrad (172) des zweiten Untersetzungsgetriebes (170) ein Hohlrad ist.

8. Fahrzeug-Antriebsstrangsystem nach Anspruch 6 und 7, wobei das Zahnrad (172) des zweiten Untersetzungsgetriebes (170) im Wesentlichen koaxial zu dem Hohlrad (161) des ersten Untersetzungsgetriebes (160) angeordnet ist.

9. Fahrzeug-Antriebsstrangsystem nach Anspruch 8, wobei die Aktuatoranordnung (190) ferner eine Kupplungsanordnung (192) aufweist, die zwischen dem Hohlrad (161) des ersten Untersetzungsgetriebes (160) und dem Hohlrad (172) des zweiten Untersetzungsgetriebes (170) angeordnet ist.

10. Fahrzeug-Antriebsstrangsystem nach einem der vorhergehenden Ansprüche, wobei der Elektromotor (180) selektiv über ein drittes Untersetzungsgetriebe (130) mit dem Differentialgehäuse (106) verbunden ist, wobei der Elektromotor (180) optional radial außerhalb der Hohlwelle (113) angeordnet ist.

## Revendications

1. Système de transmission de véhicule pour un véhicule, ledit système comprenant un différentiel (100) comportant un carter de différentiel (106) pouvant être relié à un moteur par le biais d'un pignon (103), et deux arbres de sortie (111, 112) qui peuvent être reliés à des essieux de roue respectifs, et un moteur électrique (180) qui est sélectivement mis en prise avec le carter de différentiel (106),
dans lequel le carter de différentiel (106) s'étend dans un arbre creux (113) et le carter de différentiel (106) comprend un engrenage extérieur (104) conçu pour engrener avec le pignon (103) et un engrenage intérieur (107) qui est en prise avec les arbres de sortie (111, 112), et
dans lequel le système de transmission de véhicule comprend en outre un premier engrenage de réduction (160) en prise avec l'arbre creux (113) et un agencement d'actionneur (190) disposé entre le carter de différentiel (106) et le premier engrenage de réduction (160),
dans lequel ledit agencement d'actionneur est conçu pour transférer sélectivement un couple dans l'un quelconque des modes suivants :
i) un premier mode de transmission dans lequel l'agencement d'actionneur (190) est conçu pour être actionné pour permettre un transfert de couple du moteur électrique (180) au carter de différentiel (106) directement par le biais de l'arbre creux (113) ;
ii) un deuxième mode de transmission dans lequel l'agencement d'actionneur (190) est conçu pour être actionné pour permettre un transfert de couple du moteur électrique (180) à l'arbre creux (113) par le biais du premier engrenage de réduction (160),
dans lequel le système de transmission de véhicule comprend en outre un embrayage de coupure (193) qui est conçu pour connecter sélectivement l'engrenage extérieur (104) du carter de différentiel (106) à l'engrenage intérieur (107) du carter de différentiel (106),
dans lequel l'agencement d'actionneur comprend un manchon de sélection (191), dans lequel l'arbre creux (113) comporte une saillie radiale (141) pourvue d'un moyen de coopération, tel que des cannelures, destiné à assurer une prise avec le manchon de sélection (191), dans lequel ledit manchon de sélection (191) est conçu pour être actionné pour relier le moteur électrique (180) audit carter de différentiel (106), et
dans lequel le manchon de sélection (191) est en outre conçu pour être actionné pour connecter le moteur électrique (180) avec ledit premier engrenage de réduction (160), et dans lequel l'engrenage intérieur (107) forme l'arbre creux (113) comportant la saillie radiale (141).

2. Système de transmission de véhicule selon la revendication 1, dans lequel l'agencement d'actionneur est en outre conçu pour transférer sélectivement un couple dans :
iii) un troisième mode neutre dans lequel l'agencement d'actionneur (190) est conçu pour empêcher un transfert de couple du moteur électrique (180) au carter de différentiel (106) .

3. Système de transmission de véhicule selon la revendication 1 ou la revendication 2, dans lequel le système de transmission de véhicule comprend en outre un deuxième engrenage de réduction (170) relier à l'un des arbres de sortie (111) et sélectivement au premier engrenage de réduction (160).

4. Système de transmission de véhicule selon la revendication 3, dans lequel l'agencement d'actionneur (190) est en outre conçu pour transférer sélectivement un couple dans :
iv) un quatrième mode de vectorisation de couple dans lequel l'agencement d'actionneur (190) est conçu pour être actionné afin de permettre un transfert de couple du moteur électrique (180) à l'arbre de sortie (111) par le biais du deuxième engrenage de réduction (170).

5. Système de transmission de véhicule selon l'une quelconque des revendications précédentes, dans lequel le premier engrenage de réduction (130) est un train d'engrenage comportant une dernière roue (164) qui est disposée coaxialement autour de l'arbre creux (113) du carter de différentiel (106), ladite dernière roue (164) comportant un moyen, tel que des cannelures, de liaison avec l'agencement d'actionneur (190), et dans lequel le premier engrenage de réduction (160) est un engrenage planétaire.

6. Système de transmission de véhicule selon l'une quelconque des revendications précédentes, dans lequel le premier engrenage de réduction (160) comporte un arbre de sortie (163) en prise avec le carter de différentiel (106), et dans lequel l'arbre de sortie (163) du premier engrenage de réduction (130) est formé par un porte-satellites (163) et le premier engrenage de réduction (160) comprend en outre une couronne (161) engrenant avec le porte-satellites (163) .

7. Système de transmission de véhicule selon l'une ou l'autre des revendications 3 et 4, dans lequel le deuxième engrenage de réduction (170) est un train d'engrenage comportant une roue (172) comportant un moyen, tel que des cannelures, de liaison avec l'agencement d'actionneur (190), dans lequel le deuxième engrenage de réduction (170) est un engrenage planétaire, et dans lequel la roue (172) du deuxième engrenage de réduction (170) est une couronne.

8. Système de transmission de véhicule selon la revendication 6 et la revendication 7, dans lequel la roue (172) du deuxième engrenage de réduction (170) est disposée sensiblement coaxiale à la couronne (161) du premier engrenage de réduction (160).

9. Système de transmission de véhicule selon la revendication 8, dans lequel l'agencement d'actionneur (190) comprend en outre un agencement d'embrayage (192) disposé entre la couronne (161) du premier engrenage de réduction (160) et la couronne (172) du deuxième engrenage de réduction (170).

10. Système de transmission de véhicule selon l'une quelconque des revendications précédentes, dans lequel le moteur électrique (104) est sélectivement relié au carter de différentiel (106) par le biais d'un troisième engrenage de réduction (130), éventuellement dans lequel le moteur électrique (180) est disposé radialement à l'extérieur de l'arbre creux (113).
